# FASCICULE DE BREVET EUROPEEN

(11) **EP 1 895 558 B1**
(45) Date de publication et mention de la délivrance du brevet: **12.10.2011**
(21) Numéro de dépôt: 07114772.2
(22) Date de dépôt: 22.08.2007
(51) Int. Cl.: H01H 33/24, H02G 5/06

(54) **Appareillage electriques sous enveloppe metalique comportant un piege a particules**
Elektrisches Gerät mit Metallgehäuse, das einen Partikelfilter umfasst
Electrical device in a metal casing comprising a particulate trap

(30) Priorité: 30.08.2006 FR 0653516
(43) Date de publication de la demande: 05.03.2008
(73) Titulaire: AREVA T&D SAS, 92084 Paris La Défense Cedex (FR)
(72) Inventeur: Grieshaber, Wolfgang, 69006, LYON (FR)
(74) Mandataire: Poulin, Gérard

(56) Documents cités:
- EP-A2- 0 776 021
- DD-A1- 247 109
- GB-A- 2 332 566
- US-A- 3 898 408

## Description

### DOMAINE TECHNIQUE

L'invention concerne un appareillage électrique sous enveloppe métallique comprenant une cuve métallique et un échappement constitué d'un tube support de contact d'arc et d'une enveloppe entourant le tube de support et délimitant avec lui un volume annulaire le tube de support comportant, à une extrémité, une entrée pour le passage des gaz de coupure, des trous d'échappement étant prévus dans l'enveloppe pour permettre la sortie des gaz de coupure dans la cuve.

Les appareillages électriques tels que les disjoncteurs comportent des contacts d'arc qui se séparent pour interrompre la circulation d'un courant électrique. Lorsque l'appareil manoeuvre, les pièces mobiles (contacts ou la buse) frottent contre les pièces fixes, ce qui crée de petites particules isolantes ou métalliques. Un dégagement de gaz chaud est généré par l'arc qui apparaît lors d'une ouverture des contacts. Ce gaz s'écoule dans l'échappement et souffle les particules hors de l'échappement jusque dans la cuve. Or, la zone située entre l'échappement et la cuve est soumise à un champ électrique. Les particules se rassemblent sur la génératrice de la cuve et commencent à vibrer sous l'effet des champs alternatif. Certaines particules peuvent se redresser et créer des champs électriques nettement plus élevés que dans une cuve propre. Ces champs peuvent conduire à un amorçage entre l'extrémité de la particule et l'enveloppe de l'échappement. Dans une telle situation, il n'existe aucun moyen pour couper l'arc. L'appareil est alors en défaillance.

Afin de remédier à cet inconvénient, il est connu de prévoir une tôle métallique fine dans le fond de la cuve. Cette tôle comporte des perforations qui permettent le passage des particules métalliques dans l'espace compris entre la tôle et le fond de la cuve. En outre, les bords de la tôle ne touchent pas partout la cuve de manière à permettre le passage des particules. Il n'y a pas de champ électrique entre la tôle métallique et le fond de la cuve. Une fois que les particules sont sous la tôle fine, elles se trouvent dans un volume où il n'y a plus de champ électrique et les migrations s'arrêtent, elles sont piégées. Toutefois, ce dispositif présente des inconvénients. Le champ électrique qui règne sur la tôle métallique est comparable au champ qui existait auparavant sur le fond de la cuve. Cette zone étant soumise à un champ électrique elle doit satisfaire à des critères diélectriques. Il faut en particulier que les arêtes des perforations soient soignées afin d'éviter les effets de bord qui produisent des champs électriques susceptibles de créer des amorçages.

Il est également connu (WO 01/52293) de prévoir une simple rainure collectrice au fond de la cuve, sans tôle métallique. Cependant cette rainure impose de compliquer un peu le moule de fonderie, d'augmenter la masse de la fonderie et par là le prix. De plus, le champ électrique n'est pas aussi efficacement réduit que par une tôle fine en fond de cuve.

Enfin, il est également connu de prévoir un piège à particules situé entre la cuve et l'enveloppe d'échappement (US 3 898 408). Pour maintenir ce piège à particules, on a besoin d'une pièce isolante qui doit maintenir le piège à particules autour de l'enveloppe métallique sous tension de l'échappement. Le piège à particules se trouve à une tension intermédiaire entre l'enveloppe de l'échappement et la cuve. Dans le cas où il est réalisé dans une matière isolante, il est traversé par des lignes d'iso-potentiel. Cette solution présente alors deux inconvénients. Primo, les particules ne se trouvent dans une zone de champ plus faible, mais pas nul. Secondo, ce piège à particules doit être tenu dans cette position par une pièce isolante de support. Or ce support présente un risque d'amorçage par cheminement en surface de cet isolant.

La présente invention a précisément pour objet un appareillage sous enveloppe métallique comportant un piège à particules qui remédie à ces inconvénients.

Ces buts sont atteints par le fait que l'appareillage comporte un piège à particules qui est situé dans l'échappement, entre le tube de support de contact d'arc et l'enveloppe.

Cette solution présente plusieurs avantages. Le piège se trouve situé dans une zone qui n'est pas soumise à un champ électrique. En effet, le support de contact d'arc et l'enveloppe d'échappement sont des pièces métalliques au même potentiel et forment une cage de Faraday. Elles sont reliées au circuit électrique par une barre. Les charges électriques vont se mettre sur la partie la plus extérieure. Le champ électrique s'établit seulement dans la partie comprise entre la paroi extérieure de l'enveloppe de l'échappement et la cuve.

Par suite, le piège peut présenter des formes et être constitué de matériaux qui permettent d'améliorer le taux de capture des particules mais qui seraient incompatibles avec les règles de conception dans une zone soumise à un champ électrique. Ainsi une grille avec des lamelles métalliques pointues pourrait servir de piège dans la présente invention alors qu'il serait impossible de mettre ce même piège dans une zone soumise au champ électrique. D'autre part, le piège peut être de taille plus réduite.

De préférence la section transversale du volume annulaire dans lequel se trouve le piège à particules est supérieure à la section transversale du tube de support de contact d'arc.

Avantageusement le piège est situé dans la partie basse de l'échappement. De préférence le piège à particules n'est pas situé à proximité des trous d'échappement prévus dans l'enveloppe.

Dans une réalisation le piège à particules comporte des éléments souples ou flexibles.

Ces éléments souples ou flexibles sont par exemple des poils, des cils ou des lamelles. Ces poils peuvent se recourber lors de l'échappement des gaz. Ils ne diminuent par conséquent pas la section de passage offerte au gaz. Par ailleurs ils permettent de retenir les particules piégées précédemment.

Avantageusement le piège à particules est réalisé en une matière qui résiste aux gaz chauds.

Dans une autre réalisation le piège est fait d'une matière poreuse ou mousseuse.

D'autres caractéristiques et avantages de l'invention apparaîtront encore à la lecture de la description qui suit d'un exemple de réalisation donné à titre illustratif en référence aux figures annexées. Sur ces figures :
- la figure 1 est une schématique en coupe d'un appareillage électrique sous enveloppe métallique conforme à la présente invention ;
- la figure 2 est une représentation schématique de l'appareillage électrique qui montre la circulation des gaz ;
- la figure 3 est une vue de détail d'un piège à particules conforme à la présente invention.

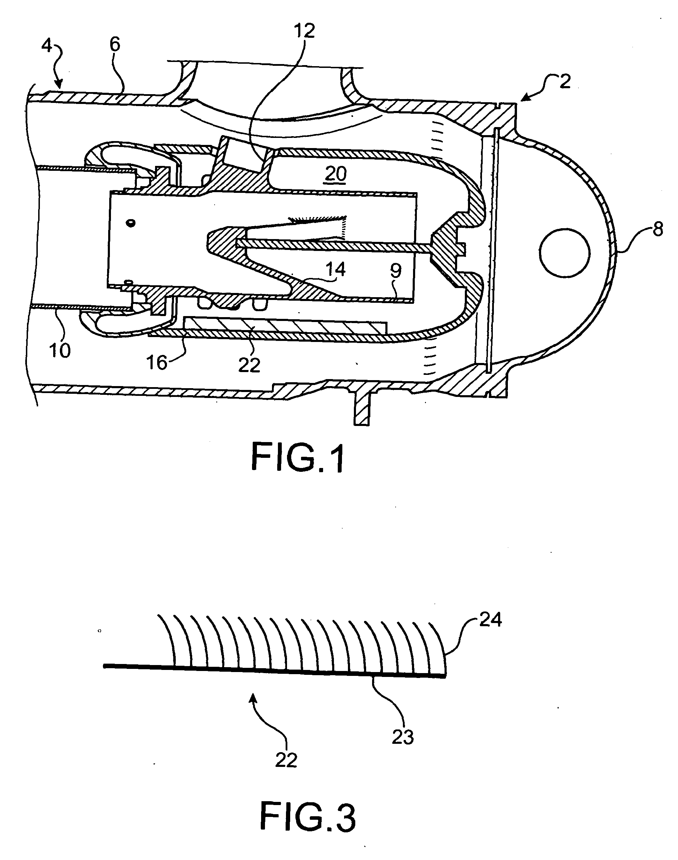

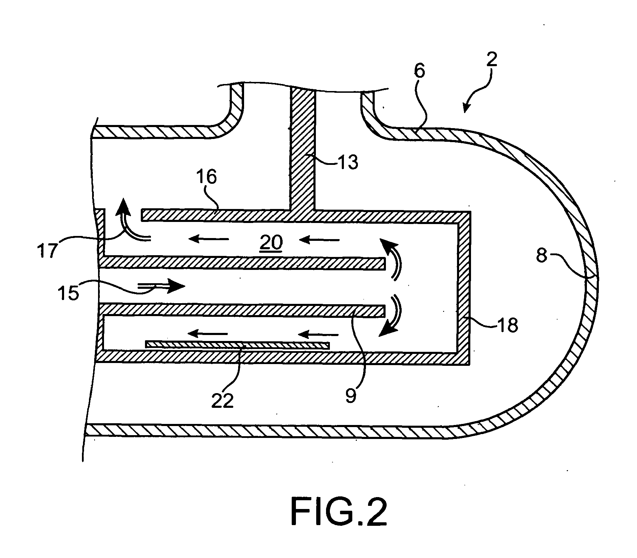

Sur la figure 1 la référence générale 2 désigne un appareillage électrique sous enveloppe métallique conforme à la présente invention. Cet appareillage comporte une cuve 4 constituée d'un fût cylindrique 6 et d'un fond hémisphérique 8 monté à l'extrémité représentée de la cuve. Un fond similaire est prévu sur la partie non représentée de la cuve 6. La cuve 4 est reliée à la terre. A l'intérieur de la cuve se trouvent des contacts d'arc (non représentés) permettant la coupure d'un courant électrique. Un tube 9 de support de contact d'arc est monté en porte à faux à l'extrémité d'une tuyère 10. Le tube 9 est relié à une barre électrique 13 (voir figure 2) qui est reçue dans un logement 12 (figure 1). Un support de contact d'arc 14 est prévu à l'intérieur du tube 9. Le tube 9 est monté à l'intérieur d'une enveloppe 16 qui comporte un fond 18. Le tube 9 délimite un volume annulaire 20 avec l'enveloppe 16.

Lors d'une coupure, un arc apparaît entre les contacts d'arc. Cet arc donne naissance à des gaz chauds (les gaz de coupure) qui parcourent à grande vitesse le tube 9 de la gauche vers la droite (selon les figures 1 et 2) comme schématisé par la flèche 15 (voir figure 2). Ces gaz changent de sens à l'extrémité 18 de l'enveloppe de l'échappement puis parcourent le volume annulaire 20 compris entre la partie extérieure du tube 9 et la paroi intérieure de l'enveloppe 16. La section transversale du volume annulaire est supérieure à la section transversale du tube 9. De ce fait la vitesse des gaz est plus faible dans le volume annulaire 20 que dans le tube 9. Les gaz chauds ressortent ensuite de l'échappement par un trou 17 (voir figure 2) formé dans l'enveloppe 16.

Conformément à l'invention on a prévu un piège à particules 22 à l'intérieur de l'enveloppe 16. Ce piège à particules est situé dans une zone non soumise à un champ électrique. En effet, le tube 9 et l'enveloppe 16 sont reliés électriquement et se trouvent par conséquent à un même potentiel. Les charges électriques se répartissent la périphérie de l'enveloppe 16 et il se produit un effet de cage de Faraday à l'intérieur de l'enveloppe. Le champ électrique existe donc entre la paroi extérieure de l'enveloppe 16 et la cuve 4, le champ électrique étant environ cinq fois plus important à proximité de l'enveloppe 16 que de la cuve 4. A titre d'exemple, la valeur du champ est de 30kV/mm. Etant donné que le piège à particules 22 est situé dans une zone qui n'est pas soumise à un champ électrique, il n'est pas nécessaire de le concevoir selon des règles applicables aux zones soumises à un champ diélectrique. Sa forme et la ou les matières le constituant peuvent donc être choisies beaucoup plus librement et en particulier on peut choisir des formes qui permettent un piégeage plus efficace des particules. Ainsi une grille avec des lamelles métalliques pointues pourrait servir de piège dans la présente invention alors qu'il serait impossible de mettre ce même piège dans une zone soumise au champ électrique. On notera également que le piège à particules est situé dans la partie basse de l'échappement. De plus, sa position est éloignée de celle du trou 17 prévu dans l'enveloppe 16. Ainsi le piège est situé dans une zone calme, dans laquelle la vitesse des gaz est faible.

On a représenté sur la figure 3 un exemple de réalisation d'un piège à particules conforme à l'invention. Le piège se compose d'un support 23 comportant des poils ou des cils flexibles 24. Ces poils ou ces cils se couchent lors de l'échappement de gaz de telle sorte qu'ils ne diminuent pas la section de passage offerte aux gaz. Les poils 24 permettent en outre de retenir les particules. Ils empêchent que les particules ne soient entraînées hors de l'échappement par le soufflage dû aux gaz.

Dans une variante de réalisation, le piège est fait d'une matière poreuse ou mousseuse. Dans tous les cas, les matériaux du piège sont choisis pour résister aux gaz chauds.

## Revendications

1. Appareillage électrique sous enveloppe métallique, comprenant une cuve métallique (4) et un échappement constitué d'un tube de support (9) de contact d'arc et d'une enveloppe (16) entourant le tube de support (9) et délimitant avec lui un volume annulaire (20) le tube de support comportant, à une extrémité, une entrée pour le passage des gaz de coupure, des trous d'échappement (17) étant prévus dans l'enveloppe pour permettre la sortie des gaz de coupure dans la cuve, **caractérisé en ce qu'**il comporte un piège à particules (22) situé dans l'échappement entre le tube de support de contact d'arc (9) et l'enveloppe (16) de l'échappement.

2. Appareillage électrique selon la revendication 1, **caractérisé en ce que** le piège à particules se trouve dans une zone sans champ électrique.

3. Appareillage électrique selon la revendication 1 ou 2, **caractérisé en ce que** la section transversale du volume annulaire (20) dans laquelle se trouve le piège à particules (22) est supérieure à la section transversale du tube de support (8) de contact d'arc.

4. Appareillage électrique selon l'une des revendications 1 à 3, **caractérisé en ce** le piège (22) est situé dans la partie basse de l'échappement.

5. Appareillage électrique selon l'une des revendications 1 à 4, **caractérisé en ce que** le piège à particules (22) n'est pas situé à proximité des trous d'échappement (17) prévus dans l'enveloppe (16).

6. Appareillage électrique selon l'une des revendications 1 à 5, **caractérisé en ce que** le piège à particules (22) comporte des éléments souples ou flexibles (24).

7. Appareillage électrique selon la revendication 6, **caractérisé en ce que** les éléments souples ou flexibles sont des poils (24), des cils ou des lamelles.

8. Appareillage électrique selon l'une des revendications 1 à 7, **caractérisé en ce** le piège à particules est réalisé en une matière qui résiste aux gaz chauds.

9. Appareillage électrique selon l'une des revendications 1 à 8, **caractérisé en ce que** le piège est fait d'une matière poreuse ou mousseuse.

## Claims

1. Metal-clad electrical equipment comprising a metal vessel (4) and an exhaust constituted by an arcing contact support tube (9) and a casing (16) surrounding the support tube (9) and co-operating therewith to define an annular volume (20), the support tube having at one end an inlet for passing arc gas, exhaust holes (17) being provided through the casing to allow arc gas to escape into the vessel, the equipment being **characterized in that** it includes a particle trap (22) situated in the exhaust between the arcing contact support tube (9) and the exhaust casing (16).

2. Electrical equipment according to claim 1, **characterized in that** the particle trap is situated in a zone without an electric field.

3. Electrical equipment according to claim 1 or claim 2, **characterized in that** the cross-section of the annular volume (20) in which the particle trap (22) is located is greater than the cross-section of the arcing contact support tube (8).

4. Electrical equipment according to any one of claims 1 to 3, **characterized in that** the trap (22) is situated in the bottom portion of the exhaust.

5. Electrical equipment according to any one of claims 1 to 4, **characterized in that** the particle trap (22) is not situated close to the exhaust hole (17) provided through the casing (16).

6. Electrical equipment according to any one of claims 1 to 5, **characterized in that** the particle trap (22) comprises elements (24) that are floppy or flexible.

7. Electrical equipment according to claim 6, **characterized in that** the floppy or flexible elements are bristles (24), lashes, or laminations.

8. Electrical equipment according to any one of claims 1 to 7, **characterized in that** the particle trap is made of a material that withstands hot gas.

9. Electrical equipment according to any one of claims 1 to 8, **characterized in that** the trap is made of a material that is porous or in the form of a foam.

## Patentansprüche

1. Metallgekapselte elektrische Einrichtung, enthaltend eine Metallhülle (4) und einen Auslass, der aus einem Lichtbogenkontakt-Halterohr (9) und aus einem Mantel (16) besteht, der das Halterohr (9) umgibt und mit diesem einen Ringraum (20) begrenzt, wobei das Halterohr an einem Ende einen Einlass für den Durchtritt von Löschgasen aufweist, wobei Auslassbohrungen (17) in dem Mantel vorgesehen sind, um den Austritt der Löschgase in die Hülle zu gestatten, **dadurch gekennzeichnet, dass** sie einen Partikelfilter (22) aufweist, der sich im Auslass zwischen dem Lichtbogenkontakt-Halterohr (9) und dem Mantel (16) des Auslasses befindet.

2. Elektrische Einrichtung nach Anspruch 1, **dadurch gekennzeichnet, dass** der Partikelfilter sich in einem Bereich ohne elektrisches Feld befindet.

3. Elektrische Einrichtung nach Anspruch 1 oder 2, **dadurch gekennzeichnet, dass** der Querschnitt des Ringraums (20), in welchem sich der Partikelfilter (22) befindet, größer ist als der Querschnitt des Lichtbogenkontakt-Halterohres (9).

4. Elektrische Einrichtung nach einem der Ansprüche 1 bis 3, **dadurch gekennzeichnet, dass** sich der Partikelfilter (22) im unteren Abschnitt des Auslasses befindet.

5. Elektrische Einrichtung nach einem der Ansprüche 1 bis 4, **dadurch** gekennzeichet, dass der Partikelfilter (22) nicht in der Nähe der im Mantel (16) vorgesehenen Auslassbohrungen (17) liegt.

6. Elektrische Einrichtung nach einem der Ansprüche 1 bis 5, **dadurch gekennzeichnet, dass** der Partikelfilter (22) nachgiebige bzw. biegsame Elemente (24) aufweist.

7. Elektrische Einrichtung nach Anspruch 6, **dadurch gekennzeichnet, dass** die nachgiebige bzw. biegsamen Elemente Haare (24), Wimpern oder Lamelle sind.

8. Elektrische Einrichtung nach einem der Ansprüche 1 bis 7, **dadurch gekennzeichnet, dass** der Partikelfilter aus einem gegen heiße Gase beständigen Material ausgebildet ist.

9. Elektrische Einrichtung nach einem der Ansprüche 1 bis 8, **dadurch gekennzeichnet, dass** der Partikelfilter aus einem porösen bzw. schaumartigen Material hergestellt ist.
